# EUROPÄISCHE PATENTSCHRIFT

(11) **EP 2 230 469 B1**
(45) Veröffentlichungstag und Bekanntmachung des Hinweises auf die Patenterteilung: **06.05.2015**
(21) Anmeldenummer: 10075117.1
(22) Anmeldetag: 15.03.2010
(51) Int. Cl.: F24J 2/52, H01L 31/048, E04D 13/18, E04D 3/30

(54) **Verfahren zur Befestigung von Funktionsaufbauten auf Dächern**
Process for mounting functional structures on roofs
Procédé de montage de structures fonctionnelles sur des toits

(30) Priorität: 19.03.2009 DE 202009003862 U
(43) Veröffentlichungstag der Anmeldung: 22.09.2010
(73) Patentinhaber: Mounting Systems GmbH, 15834 Rangsdorf (DE)
(72) Erfinder: Schnitzer, Sandy, 15834 Rangsdorf (DE)
(74) Vertreter: Kietzmann, Manfred

(56) Entgegenhaltungen:
- DE-A1- 2 619 872
- DE-U1-202004 016 412
- DE-U1-202008 007 838
- FR-A1- 2 912 443
- JP-A- 2007 284 956
- JP-A- 2009 052 278

## Beschreibung

Die Erfindung betrifft die Befestigung von Funktionsaufbauten auf Dächern, insbesondere die Abstützung von Solarmodulen oder deren Traggerüste auf Dächern, deren Dachhaut durch profilierte plattenförmige Körper gebildet ist. Insbesondere betrifft dies Dachdeckungen aus Trapezblechen oder Wellblechen.

Auf die Anbindung der Traggerüste für Solarmodule oder auf die direkte Anbindung speziell zugeschnittene technische Lösungen sind bekannt.

Die in der DE 20 2008 007 838 U1 eingesetzte Trapezblechschelle ist der Form des Trapezprofil nachempfunden, wird passfähig auf das Profil aufgesetzt und mit diesem verschraubt. Nachteilig ist, dass für jedes Trapezprofil eine passende Schelle benötigt wird.

Mit diesem technischen Problem beschäftigt sich die
DE 9409500.0 U und schlägt für einen Inneneinsatz vor, die Trapezblechschelle mit gegenüber einem Steg verstellbaren Schenkeln auszuführen, so dass zumindest eine Anpassung an unterschiedliche Trapezschenkelabstände erreichbar ist.

Weiter wird in der DE 20 2004 019 681 U1 eine Solardachanordnung beschrieben, bei der Halter, die das Verbindungsglied zwischen Dachhaut und Solarmodul bilden, mittels die Dachhaut durchsetzender Befestigungselemente fixiert werden. Als Befestigungselemente sind Niete vorgesehen. Die Niete sind durch die Wellenberge geführt. Der Halter selbst ist ein schmaler W-förmig gebogener Metallstreifen. Zwischen dem Halter und der Dachhaut ist weiter ein Auflagepolster angeordnet.

Aus der JA 2007284956 A ist eine Befestigungseinrichtung für auf dem Dachfirst anzuordnende Vorrichtung bekannt. Diese besteht aus einem über dem Dachfirst angeordneten Mitteilteil und beidseitig am Mittelteil scharnierartig befestigten Schenkeln, die mit der Dachhaut verbunden sind und so das Mittelteil abstützen.

Aus der FR 2 912 443 A1 ist weiter ein bewegliches Stützsystem für eine Energierückgewinnungsvorrichtung bekannt, das aus einem Fixierrahmen besteht, der in die Gebäudefassade oder das Dach eingebaut ist und auf dem eine bewegliche Plattform angeordnet ist, die die eigentliche Energierückgewinnungsvorrichtung trägt.

In der DE 20 2008 007 662 U1 wird vorgeschlagen, dass ein Tragprofil für die Solarmodule in den Überlappungsabschnitt der Dachhautelemente eingreift. Dazu ist das Tragprofil im Überlappungsabschnitt dem Profil des Dachhautelementes nachempfunden, so dass es auf der Dachhaut aufliegt. Die Befestigung erfolgt über die Schraubverbindung, die auch benachbarte Dachhautelemente verbindet und fixiert.

Die DE 20 2007 005 995 U1 beschreibt ein Stützsystem, bei dem benachbarte Hochsicken (Profilberge) eines Trapezbleches durch ein Verbindungsblech miteinander mechanisch verbunden sind. Durch das Verbindungselement ist ein Abstützelement in Form einer Gewindestange geführt, die sich einerseits im Tiefsickenbereich (Profiltäler) abstützt und andererseits als Tragelement für das Solarmodul oder dessen Traggerüst dient.

Aus der DE 26 19 872 A1 ist weiter eine Vorrichtung zum Verbinden von Platten oder ähnlichen Bauteilen bekannt, die zum Verbinden Beschlagelemente nutzt, die von zwei gelenkig miteinander verbundenen Teilen gebildet ist, wobei die Platten an jeder Verbindungsstelle von zwei Teilen verschiedener Beschlagelemente umfasst und die Teile der Beschlagelemente mit den Platten verbunden sind.

Nachteilig beim bekannten Stand der Technik sind im wesentlichen, unzureichende Flexibilität bezüglich der Verwendung für unterschiedliche Dachplattenprofile, die aufwendige Anbindung an die Profile oder die Lastverteilung bei größeren Dachlasten, wie sie bei der Montage von Solarmodulen entstehen.

Aufgabe der Erfindung ist es, diese Nachteile mit einem neuen Befestigungsverfahren zu beseitigen.

Gelöst wird diese Aufgabe mit den Merkmalen des Anspruches 1, vorteilhafte Ausgestaltungen sind Gegenstand der Unteranprüche.

Das erfindungsgemäße Verfahren zur Befestigung von Funktionsaufbauten auf Dächern, deren Dachhaut aus profilierten Platten mit wechselnden Profilbergen und Profiltälern in Dachsparrenrichtung verlaufend besteht, mittels einer Abstützvorrichtung, die mindestens zweiteilige Stützbleche aufweist, wobei die Stützblechteile jedes Stützbleches durch ein Scharnier miteinander verbunden sind und Stützblechteile unterschiedlicher Stützbleche mittels einer Verbindung verbindbar sind, sieht vor, dass die mindestens zweiteiligen Stützbleche auf gegenüberliegenden Seiten der Profilbergmittellinie derart positioniert werden, dass die entfernt zueinander liegenden Stützblechteile flächig oder teilweise flächig an der jeweiligen Profilbergflanke anliegen, diese Stützblechteile mit den jeweiligen Profilbergflanken verbunden werden, die Verbindung der beiden anderen Stützblechteile im Bereich der Profilmittellinie vorgenommen und diese Verbindung als Anschlussbefestigung für die Funktionsaufbauten genutzt wird.

Durch die Anordnung geteilt ausgeführter Stützblechteile und ihre scharnierartige Verbindung ist die Anpassung an unterschiedliche Steigungen der Profilberge gegeben.

Als Verbindung der Stützblechteile im Bereich der Profilbergmittellinie ist bevorzugt eine Bolzenverbindung vorgesehen, wobei mindestens ein Stützblechteil ein Langloch aufweist, so dass die Verbindung der Stützblechteile einen Freiheitsgrad quer zur Profilberglängsachse aufweist und damit eine Anpassung an unterschiedliche Profilbergbreiten erreicht wird.

In weiterer Ausgestaltung des Verfahrens ist vorgesehen, dass die Stützblechteile ein- oder beidseitig oder in einem Abschnitt eine Riffelung, vorzugsweise eine Längsriffelung in Profilberglängsachse verlaufend aufweisen, so dass beim Herstellen der Verbindung zwischen den Stützblechteilen im Bereich der Profilbergmittellinie zusätzlich Formschluss entsteht.

Eine weitere bevorzugte Ausführung sieht vor, dass der Bolzen der Verbindung der Stützblechteile im Bereich der Profilbergmittellinie einen scheibenförmigen Kopf aufweist, der sich auf dem Profilberg abstützt und der vorzugsweise beidseitig eine Riffelung aufweist, so dass nach der Herstellung der Verbindung auch zwischen dem Kopf und einem Stützblechteil zusätzlich Formschluss besteht. Ein Verdrehen des Bolzens wird so verhindert.

Weiter ist alternativ zur Nutzung des Bolzens als Anschlussbefestigung für Funktionsaufbauten vorgesehen, dass in die Verbindung der Stützblechteile eine zusätzliche Anschlussbefestigung für Funktionsaufbauten integriert wird, vorzugsweise in dem die Anschlussbefestigung eine Bohrung aufweist, durch die der Bolzen der Verbindung der Stützblechteile im Bereich der Profilbergmittellinie geführt wird. Als Anschlussbefestigungen kommen bevorzugt ein Winkel oder ein U-Profil zum Einsatz. Auch hier kann durch Riffelungen ein zusätzlicher Formschluss zu mindestens einem der Stützblechteile hergestellt werden.

Die Verbindung der Stützblechteile mit den Profilbergflanken erfolgt bevorzugt mittels einer durch den Profilberg geführten Gewindebolzen-Mutter-Verbindung.

Die Erfindung soll am Beispiel einer Abstützvorrichtung auf einem Trapezblech näher beschrieben werden. Es zeigen:
- Fig. 1: die Abstützvorrichtung montiert,
- Fig. 2: ein Stützblech aus zwei Teilen,
- Fig. 3: den Bolzen der Verbindung,
- Fig. 4: die Anschlussbefestigung als Winkel und
- Fig. 5: die Anschlussbefestigung als U-Profil.

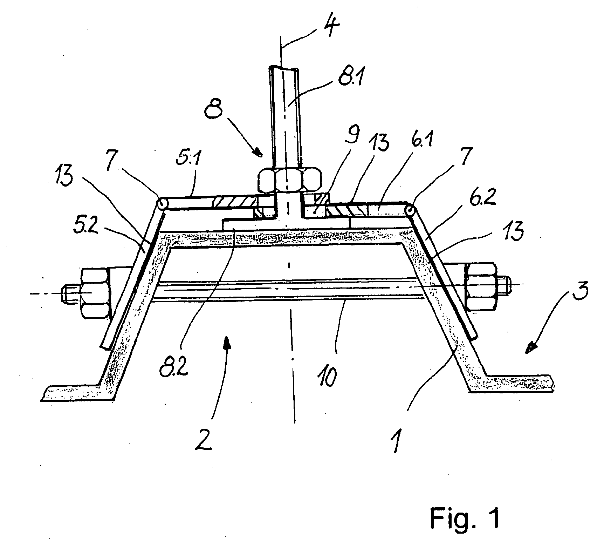

In **Fig. 1** ist die auf einer profilierten Platte 1 in Form eines Trapezbleches montierte Abstützvorrichtung für Traggerüste von Solarmodulen oder Solarmodulen dargestellt.

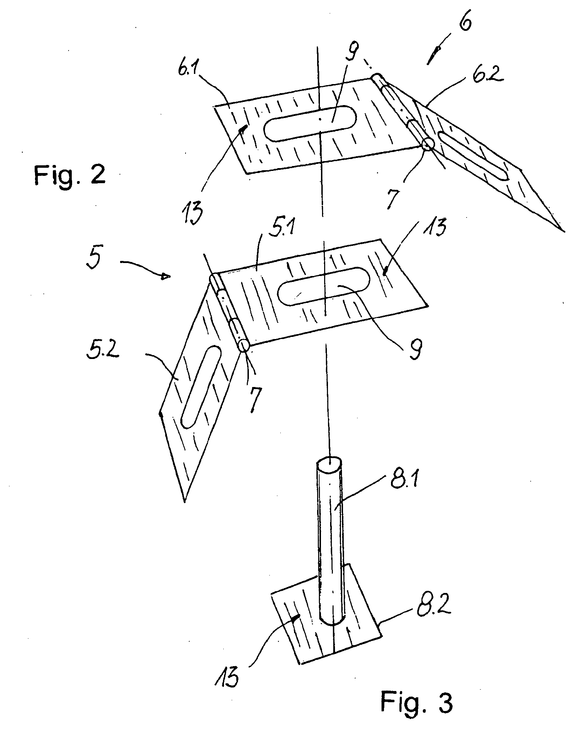

Das Trapezblech als Bestandteil einer Dachhaut weist Profilberge 2 und Profiltäler 3 auf. Jeweils beidseitig der Profilbergmittellinie 4 wird ein zweiteiliges Stützblech 5, 6 angeordnet. Deren Stützblechteile 5.1 und 5.2 bzw. 6.1 und 6.2 sind jeweils durch ein Scharnier 7 miteinander verbunden, was auch in **Fig. 2** nochmals dargestellt ist.

Die jeweils entfernt von der Profilbergmittellinie 4 angeordneten Stützblechteile 5.2, 6.2 liegen flächig an der jeweiligen Profilbergflanke an und werden mit dieser verbunden.

Die beiden anderen Stützblechteile 5.1 und 6.1 der beiden Stützbleche 5, 6 werden im Bereich der Profilbergmittellinie 4 mittels der Verbindung 8 verbunden. Diese dient hier gleichzeitig als Anschlussbefestigung für das Traggerüst der Solarmodule.

Als Verbindung 8 findet eine Bolzenverbindung Anwendung. Der Bolzen 8.1 mit Gewinde weist einen scheibenförmigen Kopf auf, was nochmals im Detail in **Fig. 3** dargestellt ist.

Sowohl das Stützblechteil 5.1 als auch das Stützblechteil 6.1 weisen ein Langloch 9 auf, so dass die Verbindung 8 der Stützblechteile 5.1, 6.1 einen Freiheitsgrad quer zur Profilberglängsachse besitzt, wodurch eine Anpassung an unterschiedliche Profilbergbreiten erreicht wird.

Sowohl der scheibenförmige Kopf 8.2 als auch die
die Stützblechteile 5.1, 6.1 besitzen beidseitig eine

Riffelung 13, vorzugsweise eine Längsriffelung in Profilberglängsachse verlaufend, so dass nach der Herstellung der Verbindung mittels des Verbindung 8 zusätzlich Formschluss zwischen diesen Teilen besteht.

Ferner wird gezeigt, dass auch die Stützblechteile 5.2 und 6.2 Riffelungen 13 auf der der Profilbergflanke zugewandten Seite aufweisen, die sich beim Herstellen der Verbindung mit dem Profilbergflanken in gewissem Umfange in das Trapezblech einformen und so neben den Kraftschluss durch die Bolzenverbindung 10 einen Formschluss bewirken.

Um möglichst wenig unterschiedliche Einzelteile einzusetzen, ist es zweckmäßig, die Stützblechteile 5.1, 5.2, 6.1 und 6.2 jeweils beidseitig mit einer Riffelung 13 zu versehen und auch in jedes dieser Stützblechteile ein Langloch 9 anzuordnen **(****Fig. 2****).**

Bei der in **Fig. 1** dargestellten Abstützvorrichtung besteht die Möglichkeit der Anordnung von Anschlussteilen für die Solarmodulmontage auf dem Schaft des Bolzens 8.1 selbst.

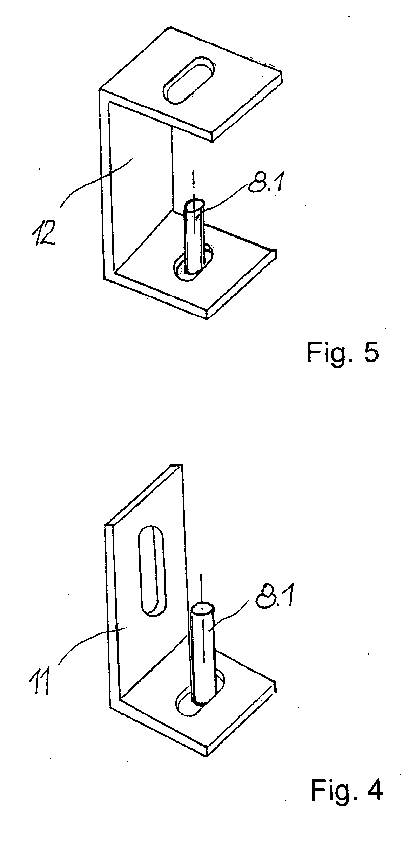

Alternativ ist auch vorgesehen, dass in die Verbindung 8 der Stützblechteile 5.1, 6.1 mittels des Bolzens 8.1 eine zusätzliche Anschlussbefestigung 11, 12 für Funktionsaufbauten integriert wird, vorzugsweise in dem die Anschlussbefestigung 11, 12 eine Bohrung aufweist, durch die der Bolzen 8.1 der Verbindung 8 geführt wird.
Solche Anschlussbefestigungen in Form eines Winkels 11 oder eines U-Profils 12 sind in **Fig. 4** und **Fig. 5** dargestellt.

Das vorgeschlagene Verfahren ist nicht auf Trapezbleche beschränkt. Es ist ebenso verwendbar für Rechteckbleche oder auch gewellte Ausführungen. Bei letzteren kann es zweckmäßig sein, die Stützbleche 5, 6 bzw. deren Teile mit einer leichten Krümmung zu versehen, um ein optimales Anliegen an den Flächen des Profilberges 2 zu erreichen. Eine Krümmungspaarung zwischen dem Stützblechteil 5.2 bzw. 6.2 und der jeweiligen Profilbergflanke bedarf es allerdings nicht. In diesem Sinne ist auch flächiges Anliegen bei dieser Abstützvorrichtung nicht als 100 %ige Anlage zu verstehen, sondern es geht um eine Annäherung.

Mit dem vorgeschlagenen Verfahren wird auf kostengünstige Weise und mit wenigen Einzelteilen eine stabile und leicht zu montierende Befestigung für Funktionsaufbauten auf Dächern geschaffen.

### Bezugszeichenliste

- 1: profilierte Platte
- 2: Profilberg
- 3: Profiltal
- 4: Profilbergmittellinie
- 5: Stützblech
- 5.1: Stützblechteil
- 5.2: Stützblechteil
- 6: Stützblech
- 6.1: Stützblechteil
- 6.2: Stützblechteil
- 7: Scharnier
- 8: Verbindung
- 8.1: Bolzen
- 8.2: Bolzenkopf
- 9: Langlöcher
- 10: Gewindebolzen - Mutter - Verbindung
- 11: Anschlussbefestigung Winkel
- 12: Anschlussbefestigung U-Profil
- 13: Riffelung

## Patentansprüche

1. Verfahren zur Befestigung von Funktionsaufbauten auf Dächern, deren Dachhaut aus profilierten Platten mit wechselnden Profilbergen und Profiltälern in Dachsparrenrichtung verlaufend besteht, mittels einer Abstützvorrichtung, die mindestens zweiteilige Stützbleche aufweist, wobei die Stützblechteile jedes Stützbleches durch ein Scharnier miteinander verbunden sind und Stützblechteile unterschiedlicher Stützbleche mittels einer Verbindung verbindbar sind,
wobei die mindestens zweiteiligen Stützbleche (5, 6) auf gegenüberliegenden Seiten der Profilbergmittellinie (4) derart positioniert werden, dass die entfernt zueinander liegenden Stützblechteile (5.2, 6.2) flächig oder teilweise flächig an der jeweiligen Profilbergflanke anliegen, diese Stützblechteile (5.2, 6.2) mit den jeweiligen Profilbergflanken verbunden werden, die Verbindung (8) der beiden anderen Stützblechteile (5.1, 6.1) im Bereich der Profilmittellinie (4) vorgenommen und diese Verbindung (8) als Anschlussbefestigung für die Funktionsaufbauten genutzt wird.

2. Verfahren nach Anspruch 1, **dadurch gekennzeichnet, dass**
die Verbindung (8) mittels eines Bolzens (8.1) vorgenommen wird.

3. Verfahren nach Anspruch 2, **dadurch gekennzeichnet, dass**
eine Anpassung an unterschiedliche Profilbergbreiten durch einen Freiheitsgrad quer zur Profilberglängsachse in der Verbindung (8) in Form eines Langloches in mindestens einem der beiden Stützblechteile (5.1, 6.1) erreicht wird.

4. Verfahren nach einem der Ansprüche 1 bis 3, **dadurch gekennzeichnet, dass**
bei der Verbindung der Stützblechteile (5.1, 6.1) zwischen diesen Formschluss hergestellt wird durch ein- oder beidseitige oder in einem Abschnitt in den Stützblechteilen (5.1, 6.1) angeordnete Riffelungen (13).

5. Verfahren nach einem der Ansprüche 2 bis 4, **dadurch gekennzeichnet, dass**
mittels Riffelungen im scheibenförmigen Kopf (8.2) des Bolzens (8.1), der sich auf dem Profilberg (2) abstützt, ein Formschluss zu einem der Stützblechteile (5.1 oder 6.1) hergestellt wird.

6. Verfahren nach einem der Ansprüche 1 bis 5, **dadurch gekennzeichnet, dass**
in die Verbindung (8) der Stützblechteile (5.1, 6.1) eine zusätzliche Anschlussbefestigung (11, 12) für Funktionsaufbauten integriert wird.

7. Verfahren nach Anspruch 6, **dadurch gekennzeichnet, dass**
die Integration der zusätzlichen Anschlussbefestigung (11, 12) in die Verbindung (8) über eine Bohrung in der Anschlussbefestigung (11, 12) für den Bolzen (8.1) vorgenommen wird.

8. Verfahren nach Anspruch 6 oder 7, **dadurch gekennzeichnet, dass**
als Anschlussbefestigung (11) ein Winkel und als Anschlussbefestigung (12) ein U-Profil eingesetzt werden.

9. Verfahren nach einem der Ansprüche 1 bis 8, **dadurch gekennzeichnet, dass**
zur Herstellung der Verbindung der Stützblechteile (5.2, 6.2) mit den Profilbergflanken eine Gewindebolzen-Mutter-Verbindung (10) durch den Profilberg (2) geführt wird.

10. Verfahren nach einem der Ansprüche 1 bis 9, **dadurch gekennzeichnet, dass**
beim Herstellen der Verbindung zwischen den Stützbleichteilen (5.2, 6.2) mit der jeweiligen Profilbergflanke eines Trapezbleches sich auf der den Profilbergflanke zugewandten Seite vorhandene Riffelungen (13) der Stützblechteile (5.2, 6.2) in die Profilbergflanke einformen zur Herstellung von Formschluss.

## Claims

1. A method for fastening functional structures to roofs, the roof cladding of which consists of profiled panels with alternating profile ridges and profile troughs running in the direction of the rafters, by means of a support device which comprises at least two-part support plates, wherein the support plate parts of each support plate are connected to one another by a hinge and support plate parts of different support plates can be connected by means of a connection,
wherein the at least two-part support plates (5, 6) are positioned on opposite sides of the profile ridge centre line (4) in such a way that the support plate parts (5.2, 6.2) located at a distance from one another bear flat or partially flat against the respective profile ridge flank, these support plate parts (5.2, 6.2) are connected to the respective profile ridge flanks, the connection (8) of the two other support plate parts (5.1, 6.1) is made in the region of the profile centre line (4), and this connection (8) is used as a connection fastening for the functional structures.

2. The method according to claim 1, **characterized in that**
the connection (8) is made by means of a bolt (8.1).

3. The method according to claim 2, **characterized in that**
an adaptation to different profile ridge widths is achieved by a degree of freedom transverse to the profile ridge longitudinal axis in the connection (8) in the form of an elongate hole in at least one of the two support plate parts (5.1, 6.1).

4. The method according to any of claims 1 to 3, **characterized in that**,
when the support plate parts (5.1, 6.1) are connected, a form fit is established between said support plate parts by virtue of corrugations (13) arranged on one or both sides or in a portion of the support plate parts (5.1, 6.1).

5. The method according to any of claims 2 to 4, **characterized in that**
a form fit to one of the support plate parts (5.1 or 6.1) is established by virtue of corrugations in the disc-shaped head (8.2) of the bolt (8.1), which is supported against the profile ridge (2).

6. The method according to any of claims 1 to 5, **characterized in that**
an additional connection fastening (11, 12) for functional structures is integrated in the connection (8) of the support plate parts (5.1, 6.1).

7. The method according to claim 6, **characterized in that**
the integration of the additional connection fastening (11, 12) in the connection (8) takes place via a bore in the connection fastening (11, 12) for the bolt (8.1).

8. The method according to claim 6 or 7, **characterized in that**
a bracket is used as connection fastening (11) and a U-shaped profile is used as connection fastening (12).

9. The method according to any of claims 1 to 8, **characterized in that**
a threaded bolt/nut connection (10) is passed through the profile ridge (2) in order to establish the connection of the support plate parts (5.2, 6.2) to the profile ridge flanks.

10. The method according to any of claims 1 to 9, **characterized in that**,
when establishing the connection between the support plate parts (5.2, 6.2) to the respective profile, ridge flank of a trapezoidal sheet, corrugations (13) of the support plate parts (5.2, 6.2) which exist on the side facing towards the profile ridge flank press into the profile ridge flank in order to establish a form fit.

## Revendications

1. Procédé de fixation de superstructures fonctionnelles sur des toits, dont la couverture de toit se compose de plaques profilées avec des sommets profilés et des creux profilés alternés mis en place dans la direction des chevrons, au moyen d'un dispositif d'appui qui présente des tôles d'appui au moins en deux parties, les parties de tôles d'appui de chaque tôle d'appui étant raccordées les unes aux autres par une charnière, et des parties de tôles d'appui de différentes tôles d'appui pouvant être raccordées au moyen d'un raccordement,
les tôles d'appui (5, 6) au moins en deux parties étant positionnées sur des côtés opposés de la ligne centrale de sommets profilés (4) de telle sorte que les parties de tôles d'appui (5.2, 6.2) disposées de façon espacée l'une de l'autre sont adjacentes, à plat ou partiellement à plat, au flanc respectif de sommets profilés, ces parties de tôles d'appui (5.2, 6.2) étant raccordées aux flancs respectifs de sommets profilés, le raccordement (8) des deux autres parties de tôles d'appui (5.1, 6.1) étant effectué dans la zone de la ligne centrale de sommets profilés (4), et ce raccordement (8) étant utilisé en tant que fixation de jonction pour les superstructures fonctionnelles.

2. Procédé selon la revendication 1, **caractérisé en ce que**
le raccordement (8) est effectué au moyen d'un goujon (8.1).

3. Procédé selon la revendication 2, **caractérisé en ce**
**qu'**une adaptation à différentes largeurs de sommets profilés est atteinte par un degré de liberté transversalement à l'axe longitudinal de sommets profilés dans le raccordement (8) sous forme d'un trou oblong dans au moins une des deux parties de tôles d'appui (5.1, 6.1).

4. Procédé selon une des revendications 1 à 3, **caractérisé en ce que**,
lors du raccordement des parties de tôles d'appui (5.1, 6.1), une liaison de forme est réalisée entre celles-ci par des cannelures (13) unilatérales ou bilatérales ou disposées dans un tronçon dans les parties de tôles d'appui (5.1,6.1).

5. Procédé selon une des revendications 2 à 4, **caractérisé en ce que**,
au moyen de cannelures dans la tête (8.2) en forme de disque du goujon (8.1) qui s'appuie sur le sommet profilé (2), il est réalisé une liaison de formé avec une des parties de tôles d'appui (5.1 ou 6.1).

6. Procédé selon une des revendications 1 à 5, **caractérisé en ce**
**qu'**une fixation de jonction (11, 12) supplémentaire pour des superstructures fonctionnelles est intégrée dans le raccordement (8) des parties de tôles d'appui (5.1, 6.1).

7. Procédé selon la revendication 6, **caractérisé en ce que**
l'intégration de la fixation de jonction (11, 12) supplémentaire dans le raccordement (8) est effectuée par le biais d'un alésage dans la fixation de jonction (11, 12) pour le goujon (8.1).

8. Procédé selon la revendication 6 ou 7, **caractérisé en ce**
**qu'**une cornière est utilisée en tant que fixation de jonction (11), et un profilé en U est utilisé en tant que fixation de jonction (12).

9. Procédé selon une des revendications 1 à 8, **caractérisé en ce que**,
pour la réalisation du raccordement des parties de tôles d'appui (5.2, 6.2) avec les flancs de sommet profilés, un raccordement goujon fileté- écrou (10) est conduit à travers le sommet profilé (2).

10. Procédé selon une des revendications 1 à 9, **caractérisé en ce que**,
lors de la réalisation du raccordement entre les parties de tôles d'appui (5.2, 6.2) avec le flanc respectif de sommets profilés d'une tôle trapézoïdale, des cannelures (13) des parties de tôles d'appui (5.2, 6.2) situées sur le côté tourné vers le flanc de sommets profilés se forment dans le flanc de sommets profilés pour la réalisation de la liaison de forme.
